# DEMANDE DE BREVET EUROPEEN

(11) **EP 1 717 502 A1**
(43) Date de publication de la demande: **02.11.2006**
(21) Numéro de dépôt: 06290675.5
(22) Date de dépôt: 26.04.2006
(51) Int. Cl.: F16L 5/10, H02G 3/22, F16L 5/02, F16L 41/08

(54) **Procédé de fabrication d'une pièce de traversée d'un faisceau de cables électriques dans un tablier de véhicule automobile, et pièce de traversée ainsi fabriquée**

(30) Priorité: 26.04.2005 FR 0504198
(71) Demandeur: Caoutchoucs Modernes, 80220 Gamaches (FR)
(72) Inventeur: Lafosse, Sébastien, 45200 Amilly (FR); Munsch, Stéphane, 80100 Abbeville (FR)
(74) Mandataire: Bolinches, Michel Jean-Marie

(57) **Abrégé**

Procédé de fabrication d'une pièce de traversée (1) d'un faisceau de câbles électriques (F) dans un tablier (42) de véhicule automobile par exemple, consistant à passer le faisceau de câbles (F) dans la pièce de traversée (1), et à surmouler une olive (35) entre le faisceau de câbles (F) et la pièce de traversée (1) pour les fixer l'un à l'autre, ce procédé consistuant à fabriquer par surmoulage et de manière monobloc la pièce de traversée (1) comprenant un insert rigide (3) avec des pattes de fixation (13) pour fixer la pièce de traversée (1) dans une ouverture de passage (40) du tablier (42), et une partie élastiquement déformable (20) avec au moins une lèvre d'étanchéité (22) et une lèvre d'isolation acoustique (28), caractérisé en ce que l'insert (3) de la pièce de traversée (1) est réalisé en polypropylène, la partie élastiquement déformable surmoulée sur l'insert (3) est réalisée à partir d'un matériau thermoplastique élastomère tel qu'un mélange de polypropylène et d'EPDM.

## Description

L'invention concerne un procédé de fabrication d'une pièce de traversée d'un faisceau de câbles électriques dans un tablier de véhicule automobile par exemple.

Dans un véhicule automobile, le tablier est une pièce qui assure la séparation entre le compartiment moteur et l'habitacle, et ce tablier est notamment traversé par au moins un faisceau de câbles électriques qui assurent les commandes des différents organes du groupe moteur depuis l'habitacle du véhicule. Les câbles électriques sont regroupés en un faisceau qui traverse une ouverture de passage ménagée dans le tablier, sachant que cette traversée doit être étanche pour éviter l'entrée de particules polluantes dans l'habitacle et être isolée d'un point de vue acoustique pour éviter la propagation des bruits du groupe moteur dans l'habitacle et nuire au confort des passagers.

Des dispositifs de traversée sont connus dans l'art antérieur, en particulier dans les documents FR-2 809 877 et FR-2 841 960.

Le dispositif de traversée selon le document FR-2 809 877 est constitué de deux pièces qui sont assemblées l'une à l'autre par clippage. La première pièce est une olive en matériau thermoplastique, du polyuréthane par exemple, qui est surmoulée autour du faisceau de câbles. La seconde pièce est annulaire, en un matériau élastomère et vient se clipper sur la première pièce. Cette seconde pièce comporte un insert en une matière plastique d'une dureté supérieure à celle de l'élastomère et est réalisée par un procédé de surmoulage, et elle présente une lèvre d'étanchéité à une extrémité (côté moteur) et une lèvre d'isolation acoustique vers son autre extrémité (côté habitacle).

Le dispositif de traversée selon le document FR-2 841 960 est réalisé en matière plastique et constitué d'un fût qui est surmoulé autour du faisceau de câbles avec, vers une extrémité, une collerette qui présente à sa périphérie des crans en forme de queue d'aronde servant d'ancrage pour un anneau souple et élastique portant des pattes d'accrochage pour sa fixation sur le tablier et une lèvre d'étanchéité. Le fût présente également une gorge périphérique dans laquelle est insérée une rondelle élastique formant une isolation acoustique.

Un but de l'invention est de concevoir un nouveau procédé de fabrication d'une pièce de traversée de conception nouvelle et qui présente notamment pour avantage d'aboutir à une pièce monobloc, recyclable, d'un montage facile et d'un prix de fabrication réduit par rapport à ceux évoqués précédemment.

A cet effet, l'invention propose un procédé de fabrication d'une pièce de traversée d'un faisceau de câbles électriques dans un tablier de véhicule automobile par exemple, consistant à passer le faisceau de câbles dans la pièce de traversée, et à surmouler une olive entre le faisceau de câbles et la pièce de traversée pour les fixer l'un à l'autre, qui est caractérisé en ce qu'il consiste à fabriquer par surmoulage et de manière monobloc la pièce de traversée comprenant un insert rigide avec des pattes de fixation pour fixer la pièce de traversée dans une ouverture de passage du tablier, et une partie élastiquement déformable avec au moins une lèvre d'étanchéité et une lèvre d'isolation acoustique, en ce que l'insert de la pièce de traversée est réalisé en polypropylène, la partie élastiquement déformable surmoulée sur l'insert est réalisée à partir d'un matériau thermoplastique élastomère tel qu'un mélange de polypropylène et d'EPDM.

Selon un mode de réalisation de l'invention, l'insert de la pièce de traversée comprend un plateau vers l'une de ses extrémités qui porte une jupe ave les pattes de fixation, lesdites pattes étant rigides et réalisées dans le même matériau que l'insert.

Avantageusement, l'insert et la partie élastiquement déformable surmoulée sur l'insert sont réalisés en des matériaux recycables.

Avantageusement, le surmoulage de l'olive entre le faisceau de câbles et la pièce de traversée est réalisé en un point variable du faisceau de câbles.

L'invention a également pour objet une pièce de traversée d'un faisceau de câbles électriques dans un tablier de véhicule automobile par exemple, qui est caractérisée en ce qu'elle est fabriquée selon un procédé tel que défini précédemment.

Une pièce de traversée fabriquée selon le procédé conforme à l'invention offre de nombreux avantages parmi lesquels il faut notamment citer :
- la réalisation d'une pièce qui est recyclable, ce qui permet de s'affranchir d'une contrainte qui est imposée par les constructeurs automobiles ;
- la réalisation d'une pièce monobloc qui est fixée par surmoulage d'une olive autour du faisceau de câbles, ce qui permet d'éviter toute désolidarisation accidentelle lorsque la pièce et l'olive qui entoure le faisceau de câble sont assemblées l'une à l'autre par clippage ; et
- un montage grandement facilité dans l'ouverture de passage du tablier puisque la pièce est monobloc.

D'autres caractéristiques, avantages et détails de l'invention ressortiront du complément de description qui va suivre en référence aux dessins annexés, donnés à titre d'exemple et dans lesquels :
- la figure 1 est une vue en perspective d'une pièce de traversée selon l'invention ; et
- la figure 2 est une vue en coupe pour illustrer le montage de la pièce de traversée de la figure 1 dans un tablier de véhicule automobile.

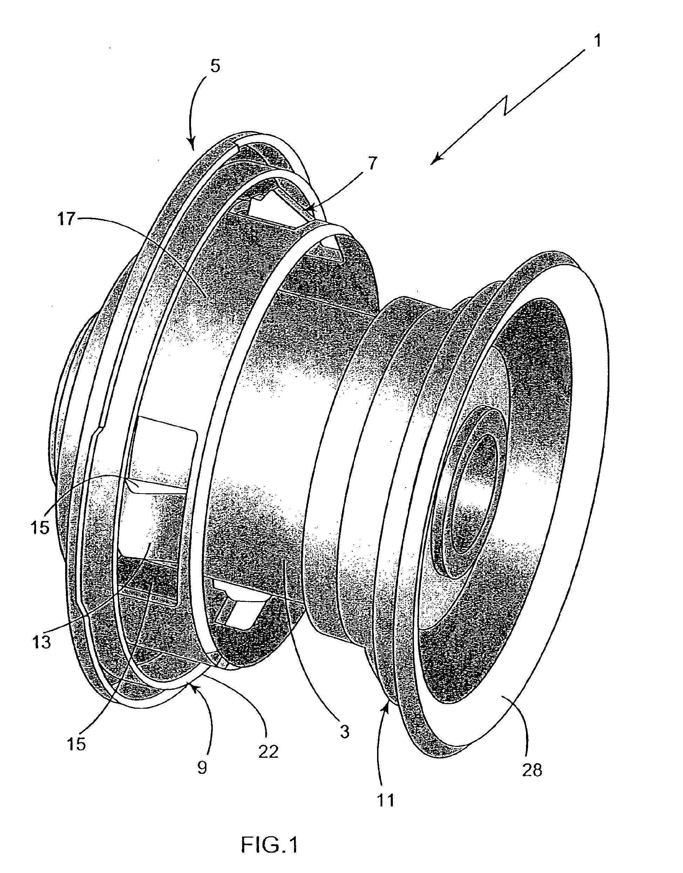

La pièce de traversée 1 selon l'invention et telle qu'illustrée sur la figure 1 est une pièce monobloc annulaire qui est fabriquée par surmoulage avec des matériaux recyclables. La pièce de traversée 1 comprend un insert tubulaire rigide 3 qui présente, vers une extrémité, un plateau 5 qui porte des moyens 7 pour assurer sa fixation dans une ouverture de passage du tablier et des moyens 9 pour assurer l'étanchéité autour d'une première extrémité (côté moteur M) de cette ouverture de passage. L'autre extrémité de l'insert 3 porte des moyens 11 qui viennent en appui sur le tablier autour de la seconde extrémité de l'ouverture de passage (côté habitacle H) pour assurer une isolation acoustique.

Le procédé de fabrication de la pièce de traversée 1 consiste dans une première étape à surmouler dans un moule l'insert 3 avec son plateau 5 et ses moyens de fixation 7 qui sont réalisés en polypropylène par exemple, et les moyens d'étanchéité 9 et les moyens d'isolation acoustique 11 qui sont réalisés en un matériau thermoplastique élastomère tel qu'un mélange de polypropylène et d'EPDM.

Les moyens de fixation 7 portés par le plateau 5 de l'insert 3, sont constitués par des pattes 13 qui sont formées entre deux ouvertures 15 d'une jupe 17 prévue vers une extrémité du plateau 5 et qui s'étend parallèlement à l'insert 3 en direction de l'autre extrémité dudit insert 3. Les pattes 13 forment des clips rigides réalisées dans le même matériau que l'insert 3.

Les moyens d'étanchéité 9 sont formés par une partie élastiquement déformable 20 qui pénètre dans au moins une rainure 21 du plateau 5 avec, à une extrémité, une lèvre d'étanchéité 22 qui fait saillie entre la jupe 17 et l'extrémité du plateau 5. La partie élastiquement déformable 20 recouvre également la face intérieure de l'insert 3, présente une lèvre d'étanchéité annulaire interne 25 et fait saillie vers l'extérieur à l'autre extrémité de l'insert 3 pour constituer les moyens d'isolation acoustique 11. Les moyens d'isolation acoustique 11 comprennent un bourrelet 26 qui entoure l'extrémité de l'insert 3 et qui se prolonge par une lèvre d'isolation acoustique 28 repliable vers l'intérieur autour d'une zone d'épaisseur réduite 30 ménagée entre le bourrelet 26 et la lèvre 28.

La seconde étape du procédé de fabrication consiste à faire passer un faisceau F de câbles électriques préalablement constitué dans l'insert 3 de la pièce de traversée 1 et à placer en un endroit déterminé du faisceau F un moule pour venir surmouler une olive 35 en polyuréthane par exemple entre le faisceau F et l'insert 3. L'olive 35 s'étend sur une longueur supérieure à celle de l'insert 3, et elle présente une première gorge périphérique 37 dans laquelle vient se loger l'extrémité de l'insert 3 (côté moteur M), et une seconde gorge périphérique 39 dans laquelle vient se loger la lèvre d'étanchéité 25 de la partie élastiquement déformable 20.

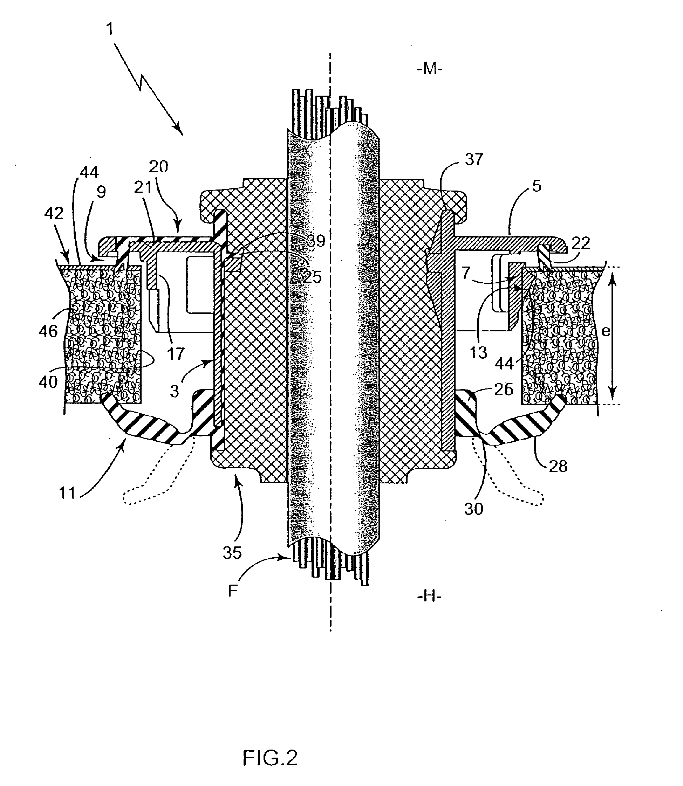

Une fois l'opération de surmoulage effectuée, la pièce de traversée 1 est montée au travers d'une ouverture de passage 40 percée dans un tablier 42, comme cela est illustré sur la figure 2. Le tablier 42 est généralement constitué par une plaque métallique 44 (côté moteur M) dont une face est recouverte d'un matériau cellulaire 46 (côté habitacle), de la mousse de polyuréthane par exemple. La pièce de traversée 1 selon l'invention et telle que fabriquée par le procédé décrit précédemment est solidaire du faisceau de câbles F, et cet ensemble est introduit, côté moteur, dans l'ouverture de passage 40 du tablier 42 jusqu'à ce que les pattes de fixation 13 viennent se clipper dans des encoches 44 ménagées autour de l'ouverture de passage 40. La pièce de traversée 1 est ainsi fixée sur le tablier 42, et il suffit de replier ensuite vers l'intérieur la lèvre d'étanchéité acoustique 28 autour de son épaisseur réduite 30 pour qu'elle vienne en contact avec le tablier 42 du côté habitacle H.

D'une manière générale, l'épaisseur e du matériau cellulaire 46 peut varier d'un véhicule à l'autre, et le procédé de fabrication de la pièce de traversée permet de tenir compte de cette épaisseur e variable. En effet, dans la première étape du procédé, on peut faire varier la position de la lèvre d'étanchéité acoustique 28 sur l'insert 3 et/ou sa longueur, et on peut également jouer sur la longueur de cet insert 3.

## Revendications

1. Procédé de fabrication d'une pièce de traversée (1) d'un faisceau de câbles électriques (F) dans un tablier (42) de véhicule automobile par exemple, consistant à passer le faisceau de câbles (F) dans la pièce de traversée (1), et à surmouler une olive (35) entre le faisceau de câbles (F) et la pièce de traversée (1) pour les fixer l'un à l'autre, **caractérisé en ce qu'**il consiste à fabriquer par surmoulage et de manière monobloc la pièce de traversée (1) comprenant un insert rigide (3) avec des pattes de fixation (13) pour fixer la pièce de traversée (1) dans une ouverture de passage (40) du tablier (42), et une partie élastiquement déformable (20) avec au moins une lèvre d'étanchéité (22) et une lèvre d'isolation acoustique (28), **en ce que** l'insert (3) de la pièce de traversée (1) est réalisé en polypropylène, la partie élastiquement déformable surmoulée sur l'insert (3) est réalisée à partir d'un matériau thermoplastique élastomère tel qu'un mélange de polypropylène et d'EPDM.

2. Procédé de fabrication selon la revendication 1, dans lequel l'insert (3) de la pièce de traversée (1) est réalisé avec un plateau (5) vers l'une de ses extrémités qui porte une jupe (17) avec les pattes de fixation (13).

3. Procédé selon la revendication 2, dans lequel les pattes de fixation (13) sont rigides et réalisées dans le même matériau que l'insert (3).

4. Procédé de fabrication selon l'une des revendications précédentes, dans lequel l'insert (3) et la partie élastiquement déformable (20) surmoulée sur l'insert (3) sont réalisés en des matériaux recyclables.

5. Procédé de fabrication selon l'une des revendications précédentes, dans lequel le surmoulage de l'olive (35) entre le faisceau de câbles (F) et l'insert (3) est réalisé en un point quelconque du faisceau de câbles (F).

6. Pièce de traversée d'un faisceau de câbles électriques (F) dans un tablier (42) de véhicule automobile par exemple, **caractérisée en ce qu'**elle est fabriquée selon un procédé tel que défini par l'une des revendications précédentes.
